# EUROPÄISCHE PATENTSCHRIFT

(11) **EP 2 349 830 B1**
(45) Veröffentlichungstag und Bekanntmachung des Hinweises auf die Patenterteilung: **27.03.2013**
(21) Anmeldenummer: 09752189.2
(22) Anmeldetag: 16.11.2009
(51) Int. Cl.: B64C 1/00, B64C 1/06

(54) **RUMPFKOMPONENTENANORDNUNG EINES LUFT- ODER RAUMFAHRZEUGS**
ARRANGEMENT FUSELAGE COMPONENTS OF AN AIRCRAFT OR SPACECRAFT
AGENCEMENT D'ELEMENTS D'UN FUSELAGE D'UN VEHICULE AERONAUTIQUE OU SPATIAL

(30) Priorität: 25.11.2008 DE 102008044049; 25.11.2008 US 117751 P
(43) Veröffentlichungstag der Anmeldung: 03.08.2011
(73) Patentinhaber: Airbus Operations GmbH, 21129 Hamburg (DE)
(72) Erfinder: GROSS, Claus-Peter, 21614 Buxtehude (DE)
(74) Vertreter: Isarpatent
(86) Internationale Anmeldenummer: PCT/EP2009/065227
(87) Internationale Veröffentlichungsnummer: WO 2010/060824

(56) Entgegenhaltungen:
- DE-A1-102006 060 364
- US-A- 3 600 016
- US-A1- 2003 080 251
- US-A1- 2006 060 705

## Beschreibung

Die Erfindung bezieht sich auf eine Rumpfkomponentenanordnung eines Luft- oder Raumfahrzeugs. US 2006/0060705A1 welches als nächstliegender Stand der Technik betrachtet wird, zeigt eine Rumpfkomponentenanordnung mit den Merkmalen des Oberbegriffs von Anspruch 1.

Obwöhl auf beliebige Strukturbaüteile, wie beispielsweise Spanten, Stringer u. dgl., anwendbar, werden die vorliegende Erfindung sowie die ihr zugrunde liegende Problematik nachfolgend mit Bezug auf schienenartige Strukturbauteile näher erläutert.

Installationselemente und Systeminstallationen sowie deren Lasten im Inneren eines Luft- oder Raumfahrzeugs und auch Kabinenkomponenten werden derzeit vornehmlich über einzelne, so genannte Brackets in die Primärstruktur des Rumpfes eines solchen Fahrzeugs eingeleitet. Dabei sind diese Brackets typischerweise an Spanten und dem Rumpfabschnitt befestigt, welche die Lasten aus den oben erwähnten Installationen und Komponenten aufnehmen.

DE 10 2006 060 364 A1 beschreibt eine Rumpfkomponentenanordnung mit einer Haut aus Kohlefaser mit einem niedrigen Wärmeausdehnungskoeffizienten, einem Strukturbauteil mit einem hohen Wärmeausdehnungskoeffizienten, wobei ein Wärmestopper mit einer niedrigen Wärmeleitfähigkeit vorgesehen ist und das Strukturbauteil an der Haut mittels des Wärmestoppers angebunden ist. Diese mechanische Ausführung besitzt eine Isolierschicht als Wärmestopper. Alle Bauteile sind über Nietverbindungen zusammengefügt. Als nachteilig dabei wird empfunden, dass zum Einen eine große Zahl an Einzelteilen benötigt wird, und dass zum Anderen die Verbindungen spanabhebende Bearbeitung, zum Teil vor Ort mit den dazugehörigen Installationszeiten und Reinigungsmaßnahmen, erfordern.

Es ist daher die Aufgabe der vorliegenden Erfindung, eineverbesserte Rumpfkomponentenanordnung eines Luft- oder Raumfahrzeugs bereitzustellen, welche die obigen Nachteile nicht mehr aufweist bzw. bei welchem sie in einem erheblichen Maß reduziert sind, und welches weitere Vorteile schafft.

Erfindungsgemäß wird diese Aufgabe durch eine Rumpfkomponentenanordnung mit den Merkmalen des Patentanspruchs 1 gelöst.

Demgemäß wird ein Strukturbauteil eines Luft- oder Raumfahrzeugs mit einem Rumpfabschnitt-Anschlussbereich zur Anbindung an einen zugeordneten Rumpfabschnitt mit einem an den zugeordneten Rumpfabschnitt in etwa angeglichenen Wärmeausdehnungskoeffizienten bereitgestellt. Das Strukturbauteil weist außerdem einen Innenanschlussbereich zur Anbindung an ein zugeordnetes Installationselement mit einem an das zugeordnete Installationselement in etwa angeglichenen Wärmeausdehnungskoeffizienten auf. Zum Verbinden des Rumpfabschnitt-Anschlussbereichs und des Innenanschlussbereichs dient ein Trennbereich. Zumindest einer der Abschnitte weist einen hohen Wärmeleitwiderstand auf.

Eine grundlegende Idee der Erfindung besteht darin, dass zumindest einer der Abschnitte einen hohen Wärmeleitwiderstand aufweist, wobei die anderen Abschnitte an die mit ihnen zu verbindenden Materialien so angepasst sind, dass ihre Wärmeausdehnungskoeffizienten an die Wärmeausdehnungskoeffizienten der mit ihnen zu verbindenden Materialien in etwa angeglichen werden können.

Somit weist die vorliegende Erfindung gegenüber den eingangs genannten Ansätzen unter anderem den Vorteil auf, dass sie auf alle Werkstoffe der mit dem Strukturbauteil zu verbindenden Bauteile unabhängig von deren Wärmeausdehnungskoeffizienten anwendbar ist.

Rumpfabschnitt-Anschlussbereich, Trennbereich und Innenanschlussbereich sind einstückig als Strukturbauteil ausgebildet.

Mit einer solchen integrierten Trennschicht in einem einstückigen Strukturbauteil sind weder eine große Anzahl von Einzelteilen noch aufwändige mechanische Verbindungsmaßnahmen wie Bohren, Entgraten, Reinigen, Nieten/Verschrauben mehr erforderlich.

Dabei ist vorgesehen, dass das Strukturbauteil als Verbundbauteil mit einem gemeinsamen Matrixmaterial ausgebildet ist. Dadurch ist es zum Beispiel bei einem Rumpfabschnitt, der ebenfalls als Verbundbauteil hergestellt ist, auf einfache Weise möglich, das Strukturbauteil mit diesem zu verbinden. Der Rumpfabschnittanbindungsabschnitt kann dabei gleiche oder ähnliche Werkstoffe als Rumpfabschnittverbund wie der Rumpfabschnitt aufweisen, zum Beispiel Kohlenfasern.

Wenn der Rumpfabschnitt aus einem Metall hergestellt ist, kann der Rumpfabschnittverbund aus Metallfolien bestehen. In ähnlicher Art und Weise ist der Innenverbund des Innenanschlussbereichs des Strukturbauteils aufgebaut. Hier können auch weitere Maßnahmen zur Verstärkung von Verbindungsabschnitten durch zusätzliche Schichten erfolgen.

Der Trennbereich weist einen Trennverbund mit einem hohen Wärmeleitwiderstand und das Matrixmaterial auf. Dabei ist bevorzugt, dass der Trennverbund zum Beispiel als Glasfasergewebe ausgebildet ist, was beispielsweise in Form von Prepregs ausgeführt sein kann, die zur Herstellung von Faserverbundbauteilen eingesetzt werden.

Es ist bei der bevorzugten Ausführung des Strukturbauteils von großem Vorteil, dass alle Verbunde bzw. Abschnitte mit dem gleichen Matrixmaterial, zum Beispiel ein Expoxydharz, hergestellt werden. Das Legen von verschiedenen Schichten eines Verbundwerkstoffes ist zum Beispiel im Flugzeugbau ein Standardverfahren, wobei die dazugehörigen Fertigungsvorrichtungen verwendbar sind.

Die erfindungsgemäße Rumpfkomponentenanordnung mit einem Strukturbauteil weist sämtliche Funktionen in ihm integriert auf, nämlich eine Anbindung an einen Rumpfabschnitt, eine Isolierschicht und eine tragende Struktur, zum Beispiel eine Schienenstruktur. Das Strukturbauteil kann in einem Stück gefertigt werden. Durch Entfall zusätzlicher Verbindungselemente ergibt sich ein vereinfachter Zusammenbau. Es kann wie ein Versteifungselement, zum Beispiel ein Stringer, auf den entsprechenden Rumpfabschnitt geklebt werden. Das erfindungsgemäße Strukturbauteil ist bei jeder Materialkombination, unabhängig von dem Wärmeausdehnungskoeffizienten des Rumpfabschnitts oder der Installationskomponenten. Dabei kann der Anschluss zum Rumpfabschnitt aus dem gleichen Material wie das Material des Rumpfabschnitts sein.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: eine schematische perspektivische Darstellung einer Rumpfkomponentenanordnung gemäß der vorliegenden Erfindung;
- Fig. 2: eine schematische perspektivische Schnittansicht eines Ausführungsbeispiels eines Strukturbauteils mit einem Rumpfabschnitt; und
- Fig. 3: eine schematische Querschnittsansicht der Darstellung aus Fig. 2.

In den Figuren bezeichnen dieselben Bezugszeichen gleiche oder funktionsgleiche Komponenten, soweit nichts Gegenteiliges angegeben ist.

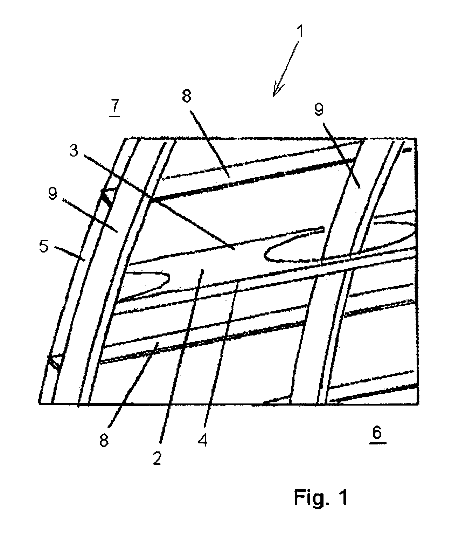

In Fig. 1 ist eine schematische perspektivische Darstellung einer erfindungsgemäßen Rumpfkomponentenanordnung 1 illustriert. Dargestellt ist ein Rumpfabschnitt 5 in Gestalt einer Haut eines nicht gezeigten Luft- oder Raumfahrzeugs. Der Rumpfabschnitt 5 ist gewölbt, wobei zum Zentrum der Wölbung hin (in der Figur rechts) einen Innenraum 6, zum Beispiel eine Kabine des Luft- und Raumfahrzeugs, angeordnet ist, der von der Haut von einem Außenraum 7 abgetrennt ist. Der Rumpfabschnitt 5 ist in Längsrichtung (in der Figur ungefähr von links nach rechts) mit Stringern 8 versteift. In Umfangsrichtung des Rumpfabschnitts 5 sind Spanten 9 angebracht. Zwischen den Stringern 8 erstreckt sich in diesem Beispiel parallel zu den Stringern 8 ein Strukturbauteil 2, welches zur Anbringung von nicht dargestellten Installationselementen, wie zum Beispiel Innenhülle, Verrohrungen und dergleichen, an einem Innenabschnitt 4 des Strukturbauteils 2 vorgesehen ist. Mit einer Rumpfabschnittverbindung 3 ist das Strukturbauteil 2 an dem Rumpfabschnitt 5 befestigt.

Der Innenraum 6 ist üblicherweise bei Betrieb des Luft- oder Raumfahrzeugs klimatisiert und wird dabei auf einer konstanten Temperatur von ca. 20°C gehalten. Der Außenraum kann eine unterschiedliche Temperatur aufweisen. So zum Beispiel eine Hallentemperatur von ca. 18°C, eine Außentemperatur auf einem Flugfeld, die der Jahreszeit und dem Standort entsprechend Minustemperaturen von z.B. -15°C und Plustemperaturen von z.B. +40°C betragen kann, als auch Außentemperaturen in großer Flughöhe von mehr als -55°C. Diese Temperaturwerte sind nicht als absolut zu sehen, sondern sollen darstellen, dass gegenüber der Innentemperatur des Innenraums 6 große Schwankungen in einer Temperaturdifferenz zwischen Außenraum 7 und Innenraum 6 auftreten.

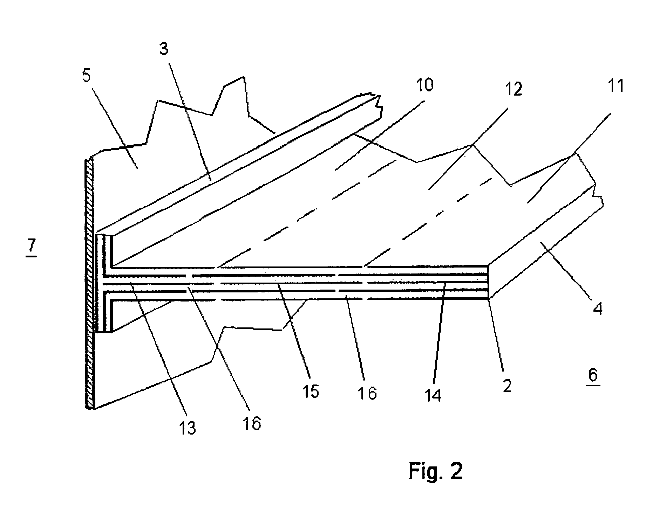

Fig. 2 zeigt eine schematische perspektivische Schnittansicht eines Ausführungsbeispiels eines Strukturbauteils 2 mit dem Rumpfabschnitt 5. In diesem Beispiel ist der Rumpfabschnitt 5 die Haut des nicht gezeigten Luft- oder Raumfahrzeugs und aus einem Verbundwerkstoff, wie zum Beispiel CFK, erstellt. Das Strukturbauteil 2 ist an der Innenseite des Rumpfabschnitts 5 mit der Rumpfabschnittverbindung 3 hier mit einem oben und einem unten liegenden Schenkel angebracht. Diese Schenkel setzen sich hier im Wesentlichen senkrecht zum Rumpfabschnitt 5 zum Innenraum 6 hin fort. Die Rumpfabschnittverbindung 3 ist mit einem Rumpfabschnitt-Anschlussbereich 10 verbunden, der in einen Trennbereich 12 übergeht, welcher mit einem Innenanschlussbereich 11 verbunden ist. Der Innenanschlussbereich 11 ist Bestandteil des Innenabschnitts 4 und für eine Befestigung von Installationselementen vorgesehen. Diese können mit dem Innenanschlussbereich 12 verklebt, vernietet, verschraubt oder mit anderen Verbindungsverfahren verbunden sein.

Der Rumpfabschnitt-Anschlussbereich 10 weist einen Rumpfabschnittverbund 13 auf, welcher von einem Trennverbund 15 des Trennbereichs 12 unterschiedlich in Werkstoff und Wärmeausdehnungskoeffizient sowie Wärmeleitwiderstand ausgebildet ist. Ebenso unterscheidet sich ein Innenverbund 14 des Innenanschlussbereichs 11 von dem Trennverbund 15. Rumpfanschlussverbindung 3, Rumpfanschlussabschnitt 10, Trennbereich 12 und Innenanschlussbereich 11 sind einstückig als Verbundbauteil bzw. Faserverbundbauteil ausgebildet. Dabei bilden die Verbunde 13, 14 und 15 den jeweiligen Faser- bzw. Schichtenhalbzeugverbund, der allseitig von einer Matrix 16, zum Beispiel Epoxydharz, umgeben und entsprechend getränkt ist. Das Strukturbauteil 2 wird als Faserverbundbauteil zum Beispiel mittels Prepregs erstellt. Andere Verfahren sind selbstverständlich möglich. Dabei werden die Verbunde 13, 14, 15 als Halbzeuge in vorher festgelegter Gestalt und Form gelegt, mit der Matrix 16 getränkt und anschließend gehärtet. Es sind dabei alle Formen und Gestalten, wie auch Verstärkungsschichten und entsprechende Einbringungen von Anbringungsabschnitten möglich.

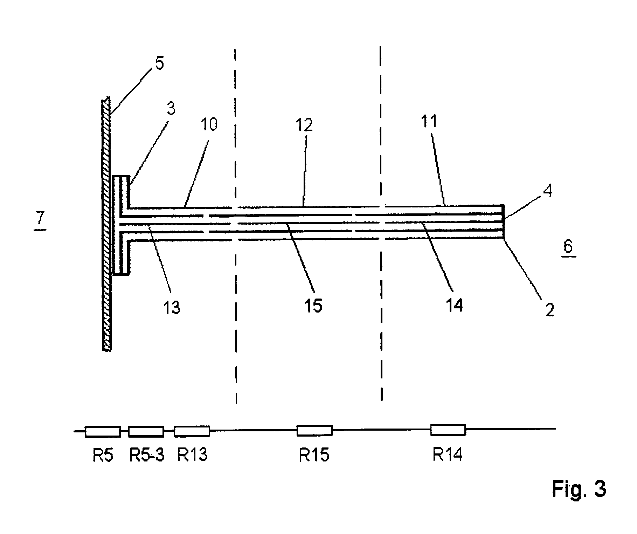

Anhand von Fig. 3 wird das Wärmeübertragungsverhalten des Strukturbauteils 2 näher erläutert. Fig. 3 zeit eine schematische Querschnittsansicht nach Fig. 2.

Die einzelnen Abschnitte 10, 12, 11 sind durch senkrechte gestrichelte Linie unterteilt. Unterhalb dieser Anordnung ist eine Reihenschaltung von Wärmeleitwiderständen R5, R5-3, R13, R14, R15, jeweils zu den Abschnitten 10, 12, 11 und dem Rumpfabschnitt 5 korrespondierend angegeben.

Die oben erwähnten Temperaturunterschiede von Innenraum 6 und Außenraum 7 bewirken eine Wärmeübertragung zwischen den beiden Räumen. Die Wärmeübertragung erfolgt bekanntermaßen über Strahlung, Leitung und Konvektion. Es wird nur die Wärmeleitung betrachtet, für welche die Wärmeleitwiderstände R5, R5-3, R13, R14, R15 der einzelnen Abschnitte 10, 12, 11 und Komponenten hier erläutert werden.

Bei einem Rumpfabschnitt 5 aus einem Faserverbundwerkstoff (zum Beispiel CFK) ist der Rumpfabschnittverbund 13 auch aus einem entsprechenden Faserverbund (zum Beispiel CFK) vorgesehen. Ist der Rumpfabschnitt 5 ein Metall, so weist der Rumpfabschnittverbund 13 ein gleiches oder ähnliches Metall in Gestalt von Metallfäden und/oder -folien/schichten auf. Dadurch besitzen Rumpfabschnitt 5 und Rumpfabschnittsanschlussabschnitt des Strukturbauteils 2 in etwa angeglichene Wärmeausdehnungskoeffizienten. Der Trennverbund 15 des Trennbereichs 12 ist zum Beispiel ein Glasfasergewebe, und der Innenanschlussverbund 14 ein Verbund, der zu dem Installationselement (nicht gezeigt) korrespondiert (zum Beispiel metallisch oder/und Faserverbund). Wärmeausdehnungskoeffizienten von Innenanschlussverbund 14 und Installationselement sind in etwa angeglichen. Somit entstehen zwischen Rumpfabschnitt 5 und Strukturbauteil 2 und zwischen Installationselement und Strukturbauteil 2 keine wesentlichen bzw. reduzierte Spannungen.

Eine Wärmeübertragung, zum Beispiel von dem Innenraum 6 als Wärmequelle mit ca. 20°C zum Außenraum als Wärmesenke mit ca. -55°C erfolgt über das Strukturbauteil 2, was in der darunter skizzierten Wärmeleitwiderstandsreihe als Ersatzschaubild dargestellt ist. Werte der Wärmeleitwiderstände werden nur relativ angegeben, die speziellen Werte sind einschlägigen Tabellen zu entnehmen. Der Innenanschlussbereich 11 besitzt einen Wärmeleitwiderstand R14, der bei einem metallischen Verbund relativ gering und bei einem Faserverbund relativ groß sein kann. Daran schließt sich ein Wärmeleitwiderstand R15 des Trennverbundes 15 an, der immer entsprechend dem Beispiel Glasfasergewebe sehr hoch ist. Er bildet somit eine Barriere gegenüber der nach außen fließenden Wärme. Wärmeleitwiderstande R13 korrespondiert zu dem Rumpfabschnittanschlussverbund 13 und entspricht dessen Werkstoff, kann also bei einem CFK-Werkstoff relativ hoch und bei einem Metall relativ gering ausfallen. Wärmewiderstand R5-13 charakterisiert den Übergang zwischen Rumpfabschnittverbindung 3 und dem Rumpfabschnitt und Wärmewiderstand R5 korrespondiert zum Werkstoff des Rumpfabschnitts 5 und ist bei einem CFK-Werkstoff relativ hoch und bei einem Metall relativ gering.

Hieraus ist zu erkennen dass unabhängig von der Ausführung der Installationselemente und des Rumpfabschnitts 5 immer eine Wärmebarriere in Gestalt des hohen Wärmeleitwiderstands R15 des Trennverbundes 15 vorhanden ist, wobei eine Kondensation an dem Strukturbauteil 2 weitgehend ausgeschlossen werden kann.

Durch das einstückige Strukturbauteil 2 ergibt sich ein Bauteil mit hoher Gestaltungsfreiheit bei ähnlichen bis gleichen Herstellverfahren der anderen Fahrzeugbauteile als Verbundbauteile mit dem Vorteil einer integrierten hohen Wärmeisolation innerhalb des Strukturbauteils sowie der oben angegebenen gleichzeitig integrierten Funktionen.

Obwohl die vorliegende Erfindung anhand bevorzugter Ausführungsbeispiele vorliegend beschrieben wurde, ist sie darauf nicht beschränkt, sondern auf vielfältige Weise kombinierbar und modifizierbar.

Beispielsweise können die Abschnitte 10, 12, 11 in ihrer Anordnung eine unterschiedliche Ausdehnung aufweisen. Sie können auch mehrfach hintereinander angeordnet sein.

Bei einem Strukturbauteil 2 eines Luft- oder Raumfahrzeugs mit einem Rumpfabschnitt-Anschlussbereich 10 zur Anbindung an einen zugeordneten Rumpfabschnitt 5 mit einem an den zugeordneten Rumpfabschnitt 5 in etwa angeglichenen Wärmeausdehnungskoeffizienten; einem Innenanschlussbereich 11 zur Anbindung an ein zugeordnetes Installationselement mit einem an das zugeordnete Installationselement in etwa angeglichenen Wärmeausdehnungskoeffizienten; und einem Trennbereich 12 zum Verbinden des Rumpfabschnitt-Anschlussbereichs 10 und des Innenanschlussbereichs 11, weist zumindest einer der Abschnitte 10, 11, 12 einen hohen Wärmeleitwiderstand R13, R14, R15 auf. Eine Rumpfkomponentenanordnung 1 weist zumindest ein solches Strukturbauteil 2 auf.

### Bezugszeichenliste

- 1: Rumpfkomponentenanordnung
- 2: Strukturbauteil
- 3: Rumpfabschnittverbindung
- 4: Innenabschnitt
- 5: Rumpfabschnitt
- 6: Innenraum
- 7: Außenraum
- 8: Stringer
- 9: Spant
- 10: Rumpfabschnitt-Anschlussbereich
- 11: Innenanschlussbereich
- 12: Trennbereich
- 13: Rumpfabschnittverbund
- 14: Innenverbund
- 15: Trennverbund
- 16: Matrixmaterial
- R5: Wärmeleitwiderstand des Rumpfabschnitts
- R5-3: Wärmeleitwiderstand des Überganges zwischen Rumpfabschnitt und Rumpfabschnittverbindung
- R13: Wärmeleitwiderstand des Rumpfabschnittverbunds
- R14: Wärmeleitwiderstand des Innenverbunds
- R15: Wärmeleitwiderstand des Trennverbunds

## Patentansprüche

1. Rumpfkomponentenanordnung eines Luft- oder Raumfahrzeugs, mit einem Rumpfabschnitt (5) und einem Strukturbauteil (2), welches Folgendes umfasst:
einen Rumpfabschnitt-Anschlussbereich (10) zur Anbindung an den Rumpfabschnitt (5), welches einen an den Rumpfabschnitt (5) in etwa angeglichenen Wärmeausdehnungskoeffizienten aufweist;
einen Innenanschlussbereich (11) zur Anbindung an ein zugeordnetes Installationselement, welches einen an das zugeordnete Installationselement in etwa angeglichenen Wärmeausdehnungskoeffizienten aufweist; und
einen Trennbereich (12) zum Verbinden des Rumpfabschnitt-Anschlussbereichs (10) und des Innenanschlussbereichs (11), wobei zumindest einer der Bereiche (10, 11, 12) eine Materialstruktur mit einem hohen Wärmeleitwiderstand (R13, R14, R15) aufweist,
wobei der Rumpfabschnitt-Anschlussbereich (10), der Trennbereich (12) und der Innenanschlussbereich (11) einstückig miteinander ausgebildet sind,
wobei das Strukturbauteil (2) als Verbundbauteil mit einem gemeinsamen Matrixmaterial (16) ausgebildet ist, wobei der Trennbereich (12) einen Trennverbund (15) mit einem hohen Wärmeleitwiderstand (R14) und das Matrixmaterial (16) aufweist, **dadurch gekennzeichnet, dass** ein Rumpfabschnittsverbund (13) des Rumpfabschnitt-Anschlussbereichs (10) und ein Innenverbund (14) des Innenanschlussbereichs (11) in Werkstoff, Wärmeausdehnungskoeffizient und Wärmeleitwiderstand unterschiedlich zu dem Trennverbund (15) ausgebildet sind.

2. Rumpfkomponentenanordnung nach Anspruch 1,
**dadurch gekennzeichnet,**
**dass** der Trennverbund (15) als Glasfasergewebe ausgebildet ist.

3. Rumpfkomponentenanordnung nach zumindest einem der Ansprüche 1 bis 2,
**dadurch gekennzeichnet,**
**dass** der Rumpfabschnitt-Anschlussbereich (10) einen Rumpfabschnittverbund (13) aus einem dem Rumpfabschnitt (5) entsprechenden Material und das Matrixmaterial (16) aufweist.

4. Rumpfkomponentenanordnung nach Anspruch 3,
**dadurch gekennzeichnet,**
**dass** der Rumpfabschnittverbund (13) den gleichen Verbundwerkstoff wie der Rumpfabschnitt (5) aufweist, wenn der Rumpfabschnitt (5) aus einem Verbundwerkstoff besteht.

5. Rumpfkomponentenanordnung nach Anspruch 3,
**dadurch gekennzeichnet,**
**dass** der Rumpfabschnittverbund (13) Metallfolien aufweist, wenn der Rumpfabschnitt (5) aus einem metallischen Werkstoff besteht.

6. Rumpfkomponentenanordnung nach zumindest einem der Ansprüche 1 bis 5,
**dadurch gekennzeichnet,**
**dass** der Innenanschlussbereich (11) einen Innenverbund (15) mit einem an das zugeordnete Installationselement in etwa angeglichenen Wärmeausdehnungskoeffizienten und das Matrixmaterial (16) aufweist.

## Claims

1. Fuselage component arrangement of an aircraft or spacecraft, comprising a fuselage portion (5) and a structural component (2), which comprises the following:
- a fuselage portion attachment region (10) for joining to the fuselage portion (5), which has a thermal expansion coefficient which is approximately adapted to the fuselage portion (5);
- an internal attachment region (11) for joining to an associated installation element, which has a thermal expansion coefficient which is approximately adapted to the associated installation element; and
- a separation region (12) for connecting the fuselage portion attachment region (10) and the internal attachment region (11), at least one of the regions (10, 11, 12) having a material structure having a high thermal conduction resistance (R13, R14, R15),
- the fuselage portion attachment region (10), the separation region (12) and the internal attachment region (11) being formed integrally with one another, the structural component (2) being formed as a composite component comprising a single matrix material (16), the separation region (12) comprising a separation composite (15), having a high thermal conduction resistance (R14), and the matrix material (16),
**characterised in that** a fuselage portion composite (13) of the fuselage portion attachment region (10) and an internal composite (14) of the internal attachment region (11) are formed differently from the separation composite (15) in terms of material, thermal expansion coefficient and thermal conduction resistance.

2. Fuselage component arrangement according to claim 1, **characterised in that** the separation composite (15) is formed as a glass fibre fabric.

3. Fuselage component arrangement according to at least one of claims 1 to 2, **characterised in that** the fuselage portion attachment region (10) comprises a fuselage portion composite (13), consisting of a material corresponding to the fuselage portion (5), and the matrix material (16).

4. Fuselage component arrangement according to claim 3, **characterised in that** the fuselage potion composite (13) comprises the same composite material as the fuselage portion (5) if the fuselage portion (5) consists of a composite material.

5. Fuselage component arrangement according to claim 3, **characterised in that** the fuselage portion composite (13) comprises metal foils if the fuselage portion (5) consists of a metal material.

6. Fuselage component arrangement according to at least one of claims 1 to 5, **characterised in that** the internal connection region (11) comprises an internal composite (15), having a thermal expansion coefficient which is approximately adapted to the associated installation element, and the matrix material (16).

## Revendications

1. Agencement d'éléments de fuselage d'un véhicule aéronautique ou spatial, avec une section de fuselage (5) et un élément structurel (2), qui comprend les éléments suivants:
- une zone de raccordement (10) avec la section de fuselage pour le raccordement avec la section de fuselage (5), qui présente un coefficient de dilatation thermique sensiblement adapté à la section de fuselage (5) ;
- une zone de raccordement interne (11) pour le raccordement avec un élément d'installation associé, qui présente un coefficient de dilatation thermique sensiblement adapté à l'élément d'installation associé ; et
- une zone de séparation (12) destinée à relier la zone de raccordement (10) avec la section de fuselage et la zone de raccordement interne (11), au moins l'une des zones (10, 11, 12) présentant une structure de matériau à haute résistance à la conduction thermique (R13, R14, R15), la zone de raccordement (10) avec la section de fuselage, la zone de séparation (12) et la zone de raccordement interne (11) étant formées en un seul tenant, l'élément structurel (2) étant formé comme un élément composite avec un matériau de matrice (16) commun, la zone de séparation (12) présentant un composite de séparation (15) à haute résistance à la conduction thermique (R14) et le matériau de matrice (16),
**caractérisé par le fait qu'**un composite de la section de fuselage (13) de la zone de raccordement (10) avec la section de fuselage et un composite interne (14) de la zone de raccordement interne (11) sont formés avec un matériau, un coefficient de dilatation thermique et une résistance à la conduction thermique différents du composite de séparation (15).

2. Agencement d'éléments de fuselage selon la revendication 1, **caractérisé par le fait que** le composite de séparation (15) se présente sous la forme d'un tissu en fibre de verre.

3. Agencement d'éléments de fuselage selon au moins l'une des revendications 1 à 2, **caractérisé par le fait que** la zone de raccordement (10) avec la section de fuselage (10) présente un composite de la section de fuselage (13) composé d'un matériau correspondant à la section de fuselage (5) et le matériau de matrice (16).

4. Agencement d'éléments de fuselage selon la revendication 3, **caractérisé par le fait que** le composite de la section de fuselage (13) présente le même matériau composite que la section de fuselage (5) quand la section de fuselage (5) est constituée d'un matériau composite.

5. Agencement d'éléments de fuselage selon la revendication 3, **caractérisé par le fait que** le composite de la section de fuselage (13) présente des couches de métal quand la section de fuselage (5) est constituée d'un matériau métallique.

6. Agencement d'éléments de fuselage selon au moins l'une des revendications 1 à 5, **caractérisé par le fait que** la zone de raccordement interne (11) présente un composite de séparation (15) avec un coefficient de dilatation thermique sensiblement adapté à l'élément d'installation associé et le matériau de matrice (16).
